# EUROPÄISCHE PATENTSCHRIFT

(11) **EP 0 943 469 B1**
(45) Veröffentlichungstag und Bekanntmachung des Hinweises auf die Patenterteilung: **21.04.2010**
(21) Anmeldenummer: 99105363.8
(22) Anmeldetag: 16.03.1999
(51) Int. Cl.: B60G 17/015, G01D 5/12, G01B 7/00, G01D 11/24, G01D 5/165, B60Q 1/115

(54) **Fahrzeugniveaugeber**
Vehicle level sensor
Capteur de niveau de véhicule

(30) Priorität: 17.03.1998 DE 19811431
(43) Veröffentlichungstag der Anmeldung: 22.09.1999
(73) Patentinhaber: Hella KGaA Hueck & Co., 59552 Lippstadt (DE)
(72) Erfinder: Peck, Andreas, 59494 Soest (DE)

(56) Entgegenhaltungen:
- EP-A- 0 318 145
- EP-A- 0 355 539
- EP-A- 0 398 158
- EP-A- 0 670 473
- EP-A- 0 740 365
- DE-A- 4 309 226
- DE-C- 4 415 133
- US-A- 4 162 083
- US-A- 4 168 840
- US-A- 5 270 645
- PATENT ABSTRACTS OF JAPAN Bd. 0122, Nr. 77 (E-640), 30. Juli 1988 (1988-07-30) -& JP 63 056034 A (AISIN SEIKI CO LTD; others: 01), 10. März 1988 (1988-03-10)
- PATENT ABSTRACTS OF JAPAN Bd. 0061, Nr. 17 (M-139), 30. Juni 1982 (1982-06-30) -& JP 57 044509 A (MITSUBISHI MOTORS CORP), 13. März 1982 (1982-03-13)

## Beschreibung

Die Erfindung betrifft einen Fahrzeugniveaugeber mit einem Gehäuse, mit einem in dem Gehäuse drehbar gelagerten ersten Sensorelement, mit einer ersten Leiterplatte in dem Gehäuse, die ein zweites Sensorelement aufweist, welches dem ersten Sensorelement zugeordnet ist, und mit einem externen Stecker, der mit der ersten Leiterplatte elektrisch kontaktiert ist.

Aus der Deutschen Offenlegungsschrift DE 43 09 226 A1 ist ein Fahrzeugniveaugeber bekannt, der zwei beweglich zueinander angeordnete, miteinander verbundene Bauteile aufweist, wobei das eine Bauteil mit dem Fahrzeugchassis und das andere Bauteil mit der Radaufhängung verbunden ist. Der Fahrzeugniveaugeber weist dabei ein Gehäuse auf, in dem ein erstes Sensorelement drehbar-gelagert ist. Das Gehäuse weist zudem eine Leiterplatte auf, das ein zweites Sensorelement trägt, welches dem ersten Sensorelement zugeordnet ist. Zudem weist das Gehäuse einen externen Stecker auf, der mit der Leiterplatte elektrisch kontaktiert ist. Der bekannte Fahrzeugniveaugeber weist eine kontaktlose Sensoranordnung auf, die in diesem Fall als ein magneto-resistiver Sensor ausgebildet ist, durch den die Relativbewegung zwischen Fahrzeugkarosserie und Achse des Fahrzeuges in ein Drehwinkelsignal umgewandelt wird.

Bei dem vorbekannten Fahrzeugniveaugeber erweist sich als nachteilig, daß an dem externen Stecker nur das gemessene und verstärkte Drehwinkelsignal anliegt und somit zur Ansteuerung von Leuchtweitenstellantrieben die Zwischenschaltung eines Steuergerätes erforderlich ist, das unter Verwendung der Drehwinkelsignate Steuersignale zur Einstellung der Leuchtweite der Scheinwerfer des Fahrzeuges erzeugt.

Die gleichen Nachteile ergeben sich bei der Verwendung anderer Sensorprinzipien, angefangen bei der Nutzung eines einfachen Potentiometers bis hin zu der Nutzung von induktiven Sensoren.

Aus der US 4162083 ist eine Niveaukontrolleinrichtung für Fahrzeuge bekannt, bei der in einem Gehäuse ein erstes Sensorelement drehbar gelagert ist. In dem Gehäuse ist eine erste Leiterplatte verschraubt, die elektrisch leitend mit einem zweiten Sensorelement elektrisch kontaktiert ist.

Aus der EP 0740365 A2 ist ein Steuermodul von Kraftfahrzeugen bekannt mit einem Gehäuse, dass mehrere Leiterplatten einschließen kann, die über Stanzgitteranschlüsse untereinander verbunden sind.

Der Erfindung liegt daher die Aufgabe zugrunde, einen Fahrzeugniveaugeber zu schaffen, der unmittelbar, ohne Zwischenschaltung eines elektrischen Leuchtweitensteuergerätes, die Stellantriebe zur automatischen Verstellung der Leuchtweite ansteuert und dabei möglichst einfach und kompakt aufgebaut ist.

Die Aufgabe wird durch die Merkmale des Anspruchs 1 gelöst.

Hierbei ist es von Vorteil, daß das Gehäuse eine zweite Leiterplatte aufweist, die elektrisch mit der ersten Leiterplatte und dem externen Stecker kontaktiert ist, wodurch sich eine besonders kompakte, einfach aufgebaute Anordnung ergibt.

In diesem Zusammenhang ist es von Vorteil, daß die Leiterplatten elektrische und elektronische Elemente aufweisen, die als eine Leuchtweitensteuerschaltung ausgebildet sind und mindestens ein Steckkontakt des externen Steckers elektrisch mit mindestens einem entfernt angeordneten Leuchtweitenstellantrieb verbindbar ist, wodurch auf die Zwischenschaltung eines gesonderten Leuchtweitensteuergerätes zur Erzeugung von Steuersignalen für die Leuchtweitenstellantriebe verzichtet werden kann. Aufgrund des vorgeschlagenen Fahrzeugniveaugebers wird es somit ermöglicht, eine Leuchtweitenregelanlage alleinig aus einem Fahrzeugniveaugeber und der erforderlichen Anzahl Leuchtweitenstellantrieben aufzubauen.

Dadurch daß die Leiterplatten über einen Leiterplattenhalter miteinander verbunden sind und zusätzlich elektrisch untereinander kontaktiert sind, ergibt sich der Vorteil, daß eine kompakte Baugruppe gefertigt werden kann, die alle elektrischen Komponenten umfaßt, die für sich allein handhabbar ist und die für sich allein zu Testzwecken diagnosefähig ist.

Hierbei erweist es sich als besonders vorteilhaft, daß zwischen den Leiterplatten und dem Leiterplattenhalter zur einfachen Verbindung Verbindungs- und/oder Rastelemente angeordnet sind, die ein einfaches Verbinden der Elemente ermöglichen und einen kompakten Aufbau gewährleisten.

Wird der Leiterplattenhalter dabei rahmenförmig ausgebildet und derart angeordnet, daß dieser zumindestens teilweise zwischen der ersten Leiterplatte und der zweiten Leiterplatte angeordnet ist, ergibt sich ein besonders kompakter Aufbau der Baugruppe, der zudem sicherstellt, daß die Kontaktierung zwischen den Leiterplatten mit hoher Sicherheit gewährleistet ist. Zur sicheren und klapperfreien Halterung der Baugruppe, bestehend aus den Leiterplatten und dem Leiterplattenhalter in dem Gehäuse, erweist es sich als vorteilhaft, Fixierelemente vorzusehen, die die Baugruppe in dem Gehäuse spielfrei führen, und elastische Elemente vorzusehen, die in dem das Gehäuse abschließenden Deckel angeformt sein können.

Des weiteren erweist es sich als vorteilhaft, daß der externe Stecker, der mit dem internen Stecker nach der Montage in Verbindung steht, Steckkontakte aufweist, über die ein weiterer Niveaugeber, z. B. von einer zweiten Fahrzeugachse, anschließbar ist und über die externe fahrzeugspezifische Signale, wie Geschwindigkeitssignale oder Statussignale (Licht an/aus, Bremsung), der Leuchtweitensteuerschaltung auf den Leiterplatten zugeführt werden können.

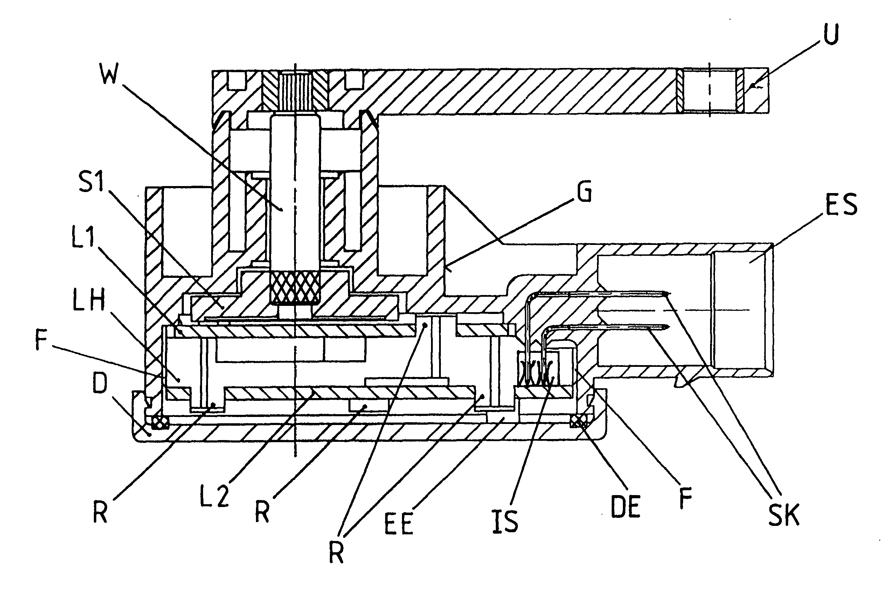

Ein Ausführungsbeispiel der Erfindung wird anhand der einzigen Figur im folgenden näher beschrieben.

Die einzige Figur zeigt den Schnitt durch einen erfindungsgemäßen Fahrzeugniveaugeber. Der Fahrzeugniveaugeber weist ein Gehäuse (G) auf, das durch einen Deckel (D) abgeschlossen ist. Ein erstes Sensorelement (S1) ist in dem Gehäuse (G) drehbar gelagert. Bei dem hier gezeigten Ausführungsbeispiel erfolgt die Lagerung über eine in dem Gehäuse angeordnete, abgedichtete Welle (W). An dem äußeren Ende der Welle (W) ist bei dem hier gezeigten Ausführungsbeispiel ein Umlenkarm (U) zur Verbindung mit einem Achsteil bzw. einem Karosserieteil angeordnet. Das in dem Gehäuse (G) angeordnete Ende der Welle (W) ist mit einem ersten Sensorelement (S1) verbunden. Das zweite Sensorelement (S2) wird von einer ersten Leiterplatte (L1) getragen und ist dem ersten Sensorelement (S1) unmittelbar zugeordnet. Das verwendete Meßprinzip zur Messung der Drehbewegung zwischen dem ersten Sensorelement (S1) und dem zweiten Sensorelement (S2) kann sehr unterschiedlich gestaltet sein. Bei dem hier gezeigten Ausführungsbeispiel wird ein induktives Meßprinzip verwendet, wobei das erste Sensorelement (S1) als Rotor und das zweite Sensorelement (S2) als Stator ausgebildet ist und die Sensorelemente Leiterbahnanordnungen aufweisen. Bei anderen Ausführungsbeispielen kann zur Erzeugung eines Drehwinkelsignals ein Potentiometer üblicher Bauart verwendet werden, eine magneto-resistive Sensoranordnung Verwendung finden, ein Hall-Meßprinzip Anwendung finden oder ein beliebig anderes Meßprinzip genutzt werden.

Die das zweite Sensorelement (S2) tragende erste Leiterplatte (L1) erzeugt somit ein Drehwinkelsignal, das zur weiteren Verarbeitung zur Verfügung steht. Die erste Leiterplatte (L1) ist elektrisch und mechanisch mit einer zweiten Leiterplatte (L2) verbunden, die ebenfalls in dem Gehäuse (G) angeordnet ist. Die beiden Leiterplatten sind bei dem hier gezeigten Ausführungsbeispiel über einen Leiterplattenhalter (LH) miteinander verbunden. Zur sicheren Verbindung weist der Leiterplattenhalter (LH) Rastelemente (R) auf, über die die Leiterplatten (L1, L2) mit dem Leiterplattenhalter (LH) verbunden sind. Der Leiterplattenhalter ist dabei rahmenförmig ausgebildet und zumindestens teilweise zwischen der ersten Leiterplatte (L1) und der zweiten Leiterplatte (L2) angeordnet. Die Leiterplatten (L1, L2) sind untereinander über einen internen Stecker (IS) elektrisch miteinander verbunden. Bei einem anderen Ausführungsbeispiel können die Leiterplatten (L1, L2) auch über einen elastischen Leiterplattenabschnitt elektrisch miteinander verbunden sein.

Zur externen Kontaktierung des Fahrzeugniveaugebers weist dieser einen externen Stecker (ES) auf, der bei dem hier gezeigten Ausführungsbeispiel über eine Anzahl in das Gehäuse (G) eingespritzter Steckkontakte (SK) verfügt. Die in das Gehäuse (G) ragenden Steckkontakte (SK) werden bei dem Zusammenbau des Fahrzeugniveaugebers automatisch mit dem internen Stecker (IS) elektrisch kontaktiert. Der interne Stecker (IS) ist bei dem hier gezeigten Ausführungsbeispiel unmittelbar auf der zweiten Leiterplatte (L2) angeordnet. Bei dem internen Stecker (IS) kann es sich dabei um eine handelsübliche SMD-bestückbare Steckverbindung handeln.

Zwischen dem Gehäuse (G) und dem Leiterplattenhalter (LH) sind Fixierelemente (F) angeordnet, die bei dem Zusammenbau des Fahrzeugniveaugebers eine einfache Montage gewährleisten, eine sichere elektrische Kontaktierung des internen Steckers (IS) mit dem externen Stecker (ES) sicherstellt und eine klapperfreie Halterung der Baugruppe, bestehend aus den Leiterplatten (L1, L2) und dem Leiterplattenhalter (LH), ermöglicht. Das Gehäuse (G) wird nach Montage der Baugruppe, die durch den Leiterplattenhalter (LH) zusammengehalten wird, durch das Aufsetzen eines zum Gehäuse (G) gehörigen Deckels (D) abgeschlossen. Der Deckel (D) weist neben einem umlaufenden Dichtelement (DE) elastische Elemente (EE) auf, welche die Baugruppe, bestehend aus den Leiterplatten (L1, L2) und dem Leiterplattenhalter (LH), in dem Gehäuse (G) niederhalten.

Die Leiterplatten (L1, L2) weisen neben einer Schaltung zur Signalaufbereitung des Drehwinkelsignals elektrische und elektronische Elemente auf, die als eine Leuchtweitensteuerschaltung ausgebildet sind. Die Leuchtweitensteuerschaltung kann dabei eine gleitende Mittelwertbildung mit variabler Zeitkonstante wie aus der europäischen Patentschrift EP 0 355 539 B1 bekannt aufweisen. Die erzeugten Steuersignale werden über mindestens einen Steckerkontakt (SK) des externen Steckers (ES) elektrisch leitend an mindestens einen mit dem Fahrzeugniveaugeber verbindbaren, entfernt angeordneten Leuchtweitenstellantrieb zur automatischen Einstellung der Leuchtweite der Fahrzeugscheinwerfer weitergeleitet. Der externe Stecker (ES) weist zudem mindestens einen Steckkontakt (SK) für den elektrischen Anschluß fahrzeugspezifischer Signale auf, die von der Leuchtweitensteuerschaltung zur Erzeugung von Steuersignalen genutzt werden.

Diese fahrzeugspezifischen Signale sind z. B. ein Geschwindigkeitssignal, ein Statussignal betreffend eine Information, ob das Licht der Scheinwerfer ein- oder ausgeschaltet ist, ein Statussignal betreffend eine Information, ob eine Bremsung erfolgt oder nicht, usw. Des weiteren kann der externe Stecker über einen weiteren Steckkontakt (SK) verfügen, der es ermöglicht, eine Diagnose des Fahrzeugniveaugebers durchzuführen.

Aufgrund des vorbeschriebenen Fahrzeugniveaugebers wird es ermöglicht, eine Leuchtweitensteueranlage allein aus dem Fahrzeugniveaugeber und einer vorgegebenen Anzahl von Leuchtweitenstellantrieben aufzubauen. Abhängig von den dynamischen und statischen Federeigenschaften eines Fahrzeuges kann es jedoch erforderlich sein, einen weiteren Niveausensor zu verwenden. Dieser Niveausensor, der dann allein ein Drehwinkelsignal liefert, kann über mindestens einen weiteren Steckkontakt (SK) des externen Steckers (ES) mit dem erfindungsgemäßen Fahrzeugniveaugeber elektrisch kontaktiert werden.

Die Baugruppe, bestehend aus den Leiterplatten (L1, L2) und dem Leiterplattenhalter (LH), bildet vor der Montage des Fahrzeugniveaugebers eine diagnosefähige Einheit.

Da bei dem in der einzigen Figur dargestellten induktiven Sensorprinzip das zweite Sensorelement unmittelbar auf der ersten Leiterplatte (L1) angeordnet ist und dem ersten Sensorelement (S1) gegenüber liegt, wurde dieses gesondert nicht eingezeichnet.

### Bezugszeichenliste

### Fahrzeugniveaugeber

- D: Deckel
- DE: Dichtelement
- EE: elastisches Element
- ES: externer Stecker
- F: Fixierelement
- G: Gehäuse
- IS: interner Stecker
- L1: erste Leiterplatte
- L2: zweite Leiterplatte
- LH: Leiterplattenhalter
- R: Rastelemente
- S1: erstes Sensorelement
- S2: zweites Sensorelement
- SK: Steckkontakt
- U: Umlenkarm
- W: Welle

## Patentansprüche

1. Fahrzeugniveaugeber mit einem Gehäuse (G), mit einem in dem Gehäuse (G) drehbar gelagerten ersten Sensorelement (S1), mit einer ersten Leiterplatte (L1) in dem Gehäuse, die ein zweites Sensorelement (S2) aufweist, welches dem ersten Sensorelement (S1) zugeordnet ist, und mit einem externen Stecker (ES), der mit der ersten Leiterplatte (L1) elektrisch kontaktiert ist,
**dadurch gekennzeichnet, daß** das Gehäuse (G) eine zweite Leiterplatte (L2) aufweist, die elektrisch mit der ersten Leiterplatte (L1) und dem externen Stecker (ES) kontaktiert ist, wobei die Leiterplatten (L1, L2) elektrische und elektronische Elemente aufweisen, die als eine Leuchtweitensteuerschaltung ausgebildet sind, und mindestens ein Steckkontakt (SK) des externen Steckers (ES) elektrisch mit mindestens einem entfernt angeordneten Leuchtweitenstellantrieb verbindbar ist, und daß das Gehäuse (G) einen Deckel (D) mit elastischen Elementen (EE) aufweiset, welche die Baugruppe, bestehend aus den Leiterplatten (L1, L2) und dem Leiterptattenhalter.(LH), in dem Gehäuse (G) niederhält.

2. Fahrzeugniveaugeber nach Anspruch 1, **dadurch gekennzeichnet, daß** die Leiterplatten (L1, L2) über einen internen Stecker (IS) elektrisch miteinander verbunden sind.

3. Fahrzeugniveaugeber nach Anspruch 1, **dadurch gekennzeichnet, daß** die Leiterplatten (L1, L2) über einen elastischen Leiterplattenabschnitt elektrisch miteinander verbunden sind.

4. Fahrzeugniveaugeber nach Anspruch 2 oder Anspruch 3, **dadurch gekennzeichnet, daß** die Leiterplatten (L1, L2) über einen Leiterplattenhalter (LH) miteinander verbunden sind.

5. Fahrzeugniveaugeber nach Anspruch 4, **dadurch gekennzeichnet, daß** die Leiterplatten (L1, L2) und/oder der Leiterplattenhalter (LH) Verbindungs- und/oder Rastelemente (R) aufweisen.

6. Fahrzeugniveaugeber nach Anspruch 4 oder Anspruch 5, **dadurch gekennzeichnet, daß** der Leiterplattenhalter (LH) rahmenförmig ausgebildet ist und zumindestens teilweise zwischen der ersten Leiterplatte (L1) und der zweiten Leiterplatte (L2) angeordnet ist.

7. Fahrzeugniveaugeber nach Anspruch 6, **dadurch gekennzeichnet, daß** der Leiterplattenhalter (LH) Fixierelemente (F), die mit dem Gehäuse (G) zusammenwirken, aufweist.

8. Fahrzeugniveaugeber nach mindestens einem der vorstehenden Ansprüche, **dadurch gekennzeichnet, daß** der externe Stecker (ES) mindestens einen Steckkontakt (SK) für den elektrischen Anschluß mindestens eines weiteren Niveaugebers aufweist.

9. Fahrzeugniveaugeber nach mindestens einem der vorstehenden Ansprüche, **dadurch gekennzeichnet, daß** der externe Stecker (ES) mindestens einen Steckkontakt (SK) für den elektrischen Anschluss fahrzeugspezifischer Signale aufweist.

## Claims

1. Vehicle level control actuator comprising a housing (G), a first sensor element (S1) on a pivoting bearing inside the housing (G), a first circuit board (L1) holding a second sensor element (S2) inside the housing wherein the second sensor element (S2) is allocated to the first sensor element (S1), and further comprising an external connector (ES) which makes electrical contact with the first circuit board (L1), **characterized in that** the housing (G) comprises a second circuit board (L2) which is electrically connected to the first circuit board (L1) and the external connector (ES), wherein the circuit boards (L1, L2) are populated with electrical and electronic elements designed as a headlamp leveling control circuit, and wherein at least one contact pin (SK) of the external connector (ES) can be electrically connected to at least one remote headlamp leveling actuator drive, and also **characterized in that** the housing (G) comprises a lid (D) with elastic elements (EE) such that the lid holds down the assembly comprised of the circuit boards (L1, L2) and the circuit board holder (LH) inside the housing (G).

2. Vehicle level control actuator of claim 1, **characterized in that** the circuit boards (L1, L2) are electrically interconnected by an internal connector (IS).

3. Vehicle level control actuator of claim 1, **characterized in that** the circuit boards (L1, L2) are electrically interconnected by an elastic circuit board section.

4. Vehicle level control actuator of claim 2 or claim 3, **characterized in that** the circuit boards (L1, L2) are interconnected by a circuit board holder (LH).

5. Vehicle level control actuator of claim 4, **characterized in that** the circuit boards (L1, L2) and/or the circuit board holder (LH) have connecting and/or locating elements (R).

6. Vehicle level control actuator of claim 4 or claim 5, **characterized in that** the circuit board holder (LH) is shaped like a frame at least some part of which is located between the first circuit board (L1) and the second circuit board (L2).

7. Vehicle level control actuator of claim 6, **characterized in that** the circuit board holder (LH) comprises locking elements (F) which interact with the housing (G).

8. Vehicle level control actuator of at least one the above claims, **characterized in that** the external connector (ES) has at least one contact pin (SK) for the electrical connection to at least one further level control actuator.

9. Vehicle level control actuator of at least one of the above claims, **characterized in that** the external connector (ES) has at least one contact pin (SK) for the electrical connection to vehicle-specific signals.

## Revendications

1. Capteur de niveau de véhicule avec un boîtier (G), avec un premier élément capteur (S1) à logement rotatif dans le boîtier (G), avec une première carte de circuits imprimés (L1) dans le boîtier, laquelle présente un deuxième élément capteur (S2) affecté au premier élément capteur (S1) et qui est en contact électrique avec la première carte de circuits imprimés (L1) via un connecteur externe (ES), **caractérisé en ce que** le boîtier (G) présente une deuxième carte de circuits imprimés (L2) qui est en contact électrique avec la première carte de circuits imprimés (L1) et le connecteur externe (ES), les cartes de circuits imprimés (L1, L2) présentant des éléments électriques et électroniques constitués en tant que circuit de commande de portée lumineuse et au moins un contact enfichable (SK) du connecteur externe (ES) pouvant au moins être relié à un mécanisme de commande de portée lumineuse disposé plus loin, et **en ce que** le boîtier (G) présente un couvercle (D) à éléments élastiques (EE) qui maintient en place le sous-groupe se composant des cartes de circuits imprimés (L1, L2) et du support à cartes de circuits imprimés (LH) sans le boîtier (G).

2. Capteur de niveau de véhicule selon la revendication 1, **caractérisé en ce que** les cartes de circuits imprimés (L1, L2) sont électriquement reliées entre elles par un connecteur interne (IS).

3. Capteur de niveau de véhicule selon la revendication 1, **caractérisé en ce que** les cartes de circuits imprimés (L1, L2) sont électriquement reliées entre elles par une section de cartes de circuits imprimés élastique.

4. Capteur de niveau de véhicule selon la revendication 2 ou la revendication 3, **caractérisé en ce que** les cartes de circuits imprimés (L1, L2) sont reliées entre elles par un support à cartes de circuits imprimés (LH).

5. Capteur de niveau de véhicule selon la revendication 4, **caractérisé en ce que** les cartes de circuits imprimés (L1, L2) et/ou le support à cartes de circuits imprimés (LH) présentent des éléments d'assemblage ou de crantage (R).

6. Capteur de niveau de véhicule selon la revendication 4 ou la revendication 5, **caractérisé en ce que** le support à cartes de circuits imprimés (LH) a la forme d'un cadre et qu'il est au moins en partie disposé entre la première carte de circuits imprimés (L1) et la deuxième carte de circuits imprimés (L2).

7. Capteur de niveau de véhicule selon la revendication 6, **caractérisé en ce que** le support à cartes de circuits imprimés (LH) présente des éléments de fixation (F) en interaction avec le boîtier (G).

8. Capteur de niveau de véhicule selon au moins l'une des revendications ci-avant, **caractérisé en ce que** le connecteur externe (ES) présente au moins un contact enfichable (SK) pour le raccordement électrique d'au moins un autre capteur de niveau.

9. Capteur de niveau de véhicule selon au moins l'une des revendications ci-avant, **caractérisé en ce que** le connecteur externe (ES) présente au moins un contact enfichable (SK) pour le raccordement électrique de signaux spécifiques au véhicule.
